# EUROPÄISCHE PATENTSCHRIFT

(11) **EP 0 442 061 B1**
(45) Veröffentlichungstag und Bekanntmachung des Hinweises auf die Patenterteilung: **20.04.1994**
(21) Anmeldenummer: 90123158.9
(22) Anmeldetag: 04.12.1990
(51) Int. Cl.: A47J 31/06, A47J 31/08

(54) **Filtervorrichtung zur Herstellung von Aromaauszügen**
Filterunit for preparing infusions
Filtre pour préparer des boissons aromatisées

(30) Priorität: 13.01.1990 DE 4000881
(43) Veröffentlichungstag der Anmeldung: 21.08.1991
(73) Patentinhaber: Melitta Haushaltsprodukte GmbH & Co. Kommanditgesellschaft, D-32371 Minden (DE)
(72) Erfinder: Brindöpke, Dieter, Dipl.-Ing., W-4950 Minden (DE)
(74) Vertreter: Loesenbeck, Karl-Otto, Dipl.-Ing.

(56) Entgegenhaltungen:
- DE-A- 2 221 831
- DE-B- 2 921 437
- DE-U- 8 701 190
- DE-U- 8 712 709
- FR-A- 820 921
- LU-A- 67 526

## Beschreibung

Die vorliegende Erfindung betrifft eine Filtervorrichtung zur Herstellung von Aromaauszügen aus Kaffee- oder Tee nach dem Oberbegriff des Patentanspruches 1.

Aus der Veröffentlichung DE-U 8 712 709 ist ein Filtergefäß für eine Filtervorrichtung zur Herstellung von Aromaauszügen bekannt, dessen Innenraum eine pyramidenartige Form aufweist. Dieses Filtergefäß ist in seinen Eckbereichen fertigungsbedingt abgerundet.

Für dieses Filtergefäß, welches auf die Anmelderin der vorliegenden Erfindung zurückgeht, werden Filterpapiereinsätze verwendet, die im Eckbereich einfach gefaltet sind. Diese Filterpapiereinsätze weisen im Gebrauchszustand eine dem Filtergefäß entsprechende pyramidenartige Form auf, wobei sich die Seitenflanken des Filterpapiereinsatzes an den gerippten Innenwandungen des Filtergefäßes abstützen, während sich die einfach gefalteten Ecken des Filterpapiereinsatzes bis in den Bereich der fertigungsbedingten Abrundungen des Filtergefäßes erstrecken.

Aus der Veröffentlichung DE-B 2 921 437 ist eine Filtervorrichtung bekannt, bei der der obere Rand des Filtergefäßes eine quadratische Grundfläche aufweist, von dem ausgehend sich vier Seitenwände pyramidenartig nach unten erstrecken, wobei im unteren Bereich des Filtergefäßes zwei jeweils dreieckige Wandteile vorgesehen sind, die eine gemeinsame, über eine Diagonale des Filtergefäßes verlaufende Grundlinie aufweisen und deren Spitzen diametral einander gegenüber und jeweils auf der anderen Diagonalen des Filtergefäßes liegen. Die beiden dreieckigen Wandteile schließen zwischen sich einen Winkel ein, der größer ist als der Winkel, den jeweils zwei einander gegenüberliegende Seitenwände zwischen sich einschließen.

Diese Konstruktion wurde gewählt, um einerseits eine möglichst geringe Bauhöhe des Filtergefäßes zu erreichen, andererseits aber noch eine unkomplizierte und nahezu abfallfreie Herstellung entsprechender Filterpapiereinsätze aus Papierbahnen zu gewährleisten.

Die Veröffentlichung FR-A 820 921 beschreibt allgemein das Zusammenwirken von Filtergefäß und einem angepaßten Filterpapiereinsatz, wobei eine weitestgehend formschlüssige Anpassung des Filterpapiereinsatzes an das Filtergefäß als erforderlich anzusehen ist.

In Figur 8 der vorgenannten Veröffentlichung ist ein pyramidenstumpfartiges Filtergefäß mit entsprechend angepaßtem Filterpapiereinsatz gezeigt. Dabei sind die Ecken des Filtergefäßes und des Filterpapiereinsatzes weder abgerundet noch abgeschrägt.

Filtervorrichtungen der gattungsgemäßen Art weisen eine Reihe von Vorteilen auf. So ist einerseits die Herstellung von Filterpapiereinsätzen für derartige Filtervorrichtungen recht einfach. Das Fassungsvermögen derartiger Filtervorrichtungen ist bei ausreichend großer, wirksamer Filterfläche ebenfalls sehr groß, so daß Filtervorrichtungen dieser Art ohne weiteres auch im Gewerbebereich genutzt werden können. Die Ausnutzung der Aromaträger ist bei derartigen Filtervorrichtungen sowohl bei kleinen wie auch bei großen Brühchargen sehr gut, daß sich auch bei kleinen Brühchargen der Aromaträger im Bereich der Pyramidenspitze sehr gut zentriert.

Der Wasserzulauf für derartige Filtervorrichtungen kann sehr einfach gestaltet sein, beispielsweise als einfache Auslauföffnung eines entsprechenden Überlaufrohres, so daß der Wasserzulauf derartiger Filtervorrichtungen gegenüber Verkalkung und Verschmutzung äußerst unempfindlich ist.

Da im allgemeinen die Filtergefäße derartiger Filtervorrichtungen mit Rippen ausgestattet sind, an denen sich die Filterpapiereinsätze abstützen, kann durch Unterdruckbildung zwischen dem jeweiligen Filterpapiereinsatz und den Wandungen des Filtergefäßes eine Beschleunigung des Filtrationsprozeßes herbeigeführt werden.

Derartige Filtervorrichtungen werden deshalb auch als Schnellfilter bezeichnet.

Die Filterpapiereinsätze selbst können im flachen Zustand verpackt werden, so daß keine Probleme mit der Formstabilität und der Handhabbarkeit der Filterpapiereinsätze einhergehen.

Es hat sich allerdings herausgestellt, daß insbesondere bei großen Brühchargen keine optimale Ausnutzung eines Aromaträgers im Eckbereich der bekannten Filtervorrichtungen erzielbar ist.

Der vorliegenden Erfindung liegt deshalb die Aufgabe zugrunde, eine Filtervorrichtungen der gattungsgemäßen Art dahingehend zu verbessern, daß unter Beibehaltung der prinzipiellen Vorteile einer derartigen Filtervorrichtung eine Optimierung der Ausnutzung des jeweiligen Aromaträgers erreicht wird.

Diese Aufgabe wird nach der Erfindung durch die Merkmale im kennzeichnenden Teil der Ansprüche 1 oder 2 gelöst.

Durch diese vergleichsweise einfache Maßnahme wird eine erheblich verbesserte und für praktische Belange nahezu optimale Ausnutzung eines Aromaträgers gewährleistet, wobei der grundsätzliche Zuschnitt für die erforderlichen Filterpapiereinsätze mit seinen bekannten Vorteilen beibehalten werden kann, es ist lediglich die Anbringung von zusätzlichen Falzungen erforderlich.

Nach einer Weiterbildung der Erfindung ist vorgesehen, daß der Filterpapiereinsatz in Gebrauchsstellung eine pyramidenstumpfartige Form aufweist, wobei das Verhältnis der kleineren Grundfläche zur größeren Grundfläche etwa im Bereich von 1 zu 10 liegt.

Eine derartige Gestaltung ist insbesondere dann vorteilhaft, wenn das Filtergefäß entsprechend dem Filterpapiereinsatz einen pyramidenstumpfartigen Innenraum aufweist, da sich hierdurch eine vergleichsweise geringe Bauhöhe für die Filtervorrichtung ergibt, ohne das damit die Nachteile beispielsweise bekannter Korbfilter oder Flachfilter in Kauf genommen werden müssen.

Filterpapiereinsätze mit pyramidenstumpfartiger Form können aber auch verwendet werden, wenn das Filtergefäß einen pyramidenartigen Innenraum aufweist und mit einem in dessen Spitze eingesetzten Adapter ausgestattet ist, der selbst pyramidenförmig gestaltet ist und auf dessen Grundfläche der pyramidenstumpfartige Filterpapiereinsatz abgestützt ist.

Dies bedeutet, daß bekannte Filtergefäße in Verbindung mit entsprechend gestalteten, neuen Filterpapiereinsätzen weiter verwendet werden können, wobei hierfür lediglich der Einsatz eines entsprechenden Adapters erforderlich ist.

In den beigefügten Zeichnungen sind Ausführungsbeispiele der Erfindung dargestellt, die im folgenden näher beschrieben werden. Es zeigen:
- Fig. 1: eine perspektivische Darstellung eines Filtergefäßes einer erfindungsgemäßen Filtervorrichtung
- Fig. 2: einen Vertikalschnitt durch das Filtergefäß gemäß Fig. 1 mit einem in die Spitze des Innenraumes eingesetzten Adapter
- Fig. 3: einen flachliegenden Filterpapiereinsatz für ein Filtergefäß gemäß Fig. 1
- Fig. 4: eine Ansicht in Richtung des Pfeiles IV in Fig.3 auf den in Gebrauchsstellung aufgeklappten Filterpapiereinsatz, wobei durch strichpuntierte Linien im Eckbereich die Anlage des Filterpapiereinsatzes im Filtergefäß angedeutet ist
- Fig. 5: einen flachliegenden Zuschnitt eines Filterpapiereinsatzes für das Filtergefäß gemäß Fig. 2 mit entsprechendem Adapter.

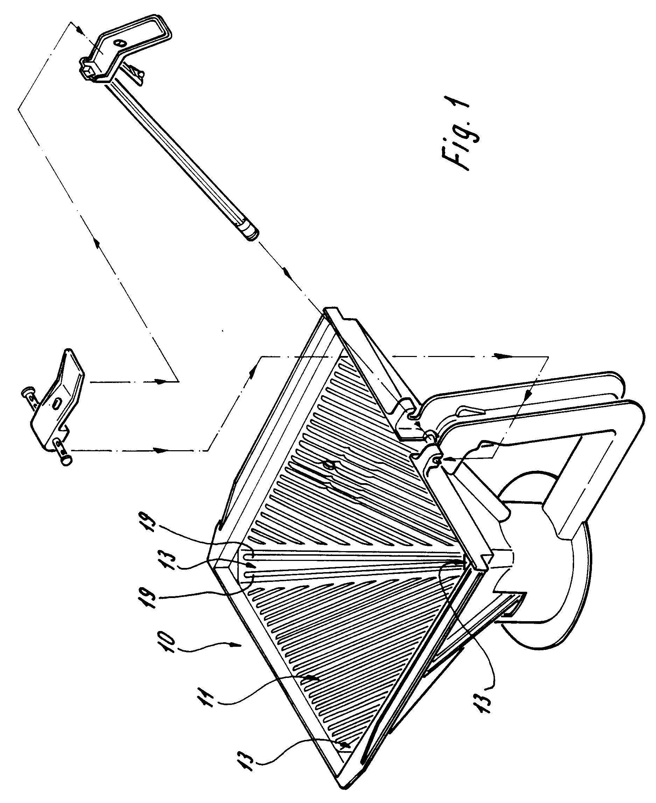

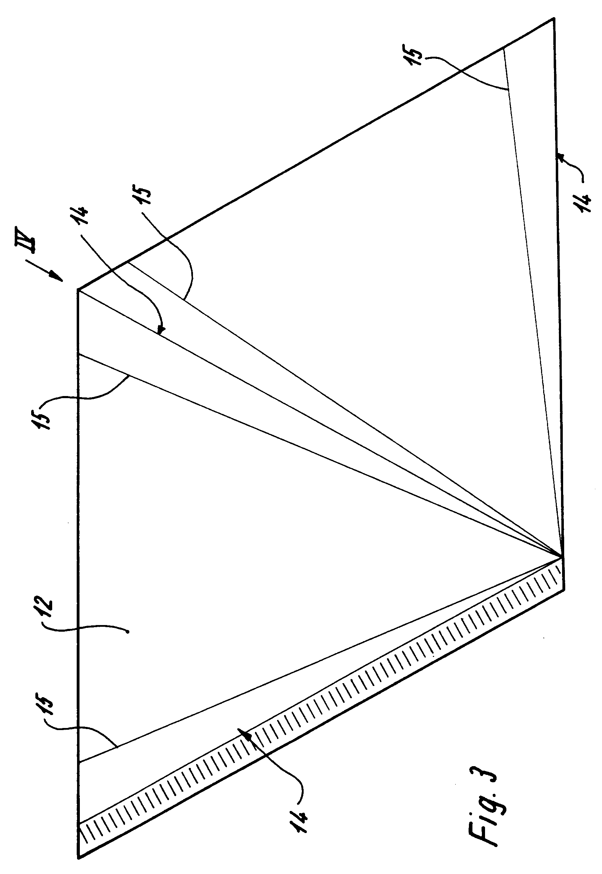

Das in Fig. 1 in perspektivischer Darstellung gezeigte, insgesamt mit dem Bezugszeichen 10 versehene Filtergefäß einer Filtervorrichtung zur Herstellung von Aromaauszügen aus Kaffee oder Tee weist einen nutzbaren Innenraum 11 auf, dessen Form weitestgehend als pyramidenartig bezeichnet werden kann. Das Filtergefäß 10 gemäß Fig. 1 bildet in Verbindung mit einem in den Innenraum 11 eingesetzten Filterpapiereinsatz 12 nach Fig. 3 eine betriebsfähige Filtervorrichtung zur Herstellung von Aromaauszügen aus Kaffee oder Tee dar.

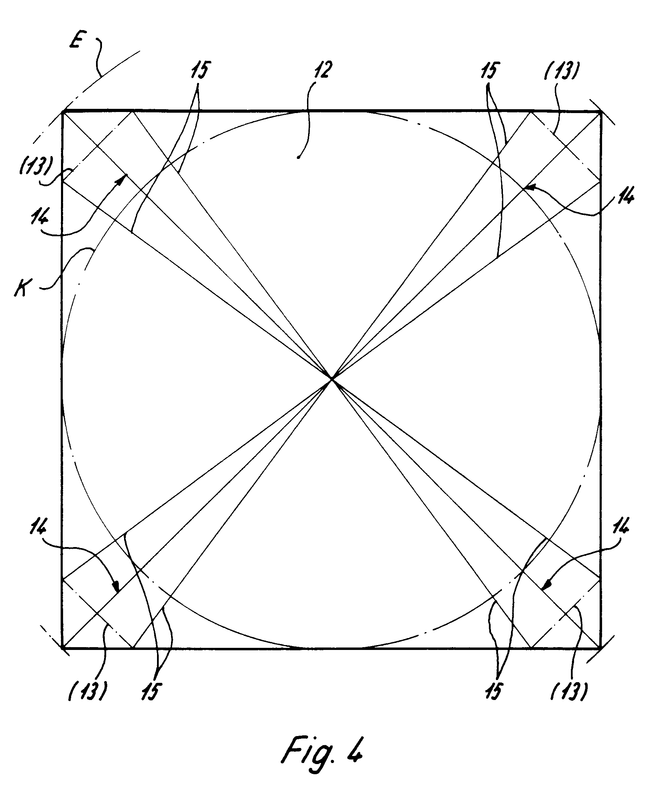

Wie Fig. 1 deutlich macht, sind die Ecken 13 des Filtergefäßes 10 im Bereich des genutzten Innenraumes 11 abgeschrägt und diese abgeschrägten Ecken 13 bilden entsprechende Anlageflächen für einen Filterpapiereinsatz 12 nach den Fig. 3 und 4, der in seinen Eckenbereichen 14 mit zusätzlichen Falzungen 15 versehen ist. Diese Falzungen 15 erlauben es, den Filterpapiereinsatz 12 weitestgehend formschlüssig an den abgeschrägten Ecken 13 des Filtergefäßes 10 abzustutzen. Durch diese Stutzung der Eckbereiche wird die Ausnutzung eines Aromaträgers in der betriebsfertigen Filtervorrichtung erheblich verbessert und für praktische Belange nahezu vervollkommnet.

Dabei kann die Zuschnittsform für einen streng pyramidenartigen Filterpapiereinsatz beibehalten werden, da lediglich die zusätzlichen Falzungen 15 angebracht werden müssen, um die Abstützung an den abgeschrägten Ecken 13 zu erreichen.

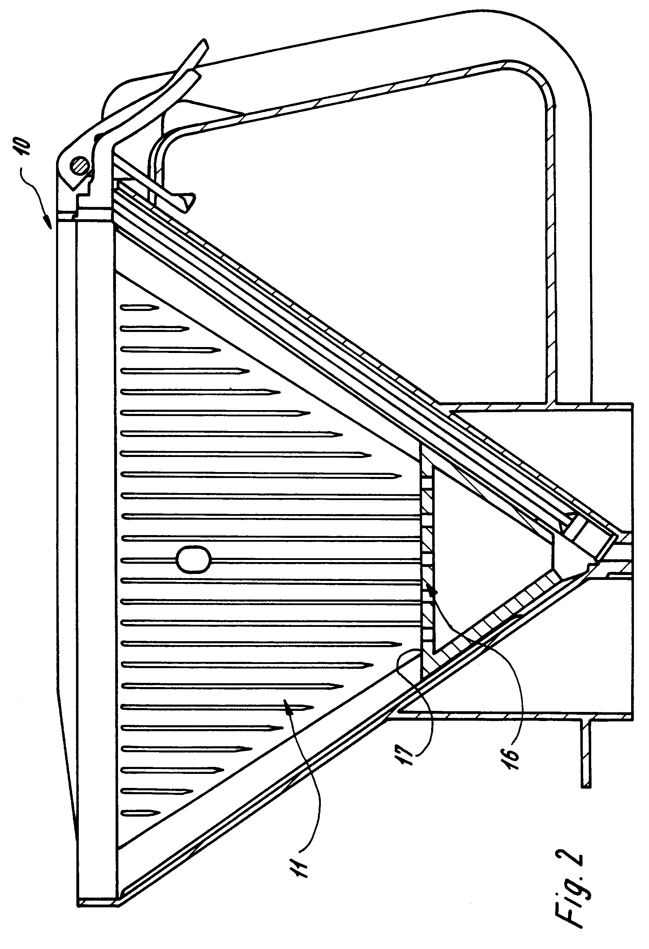

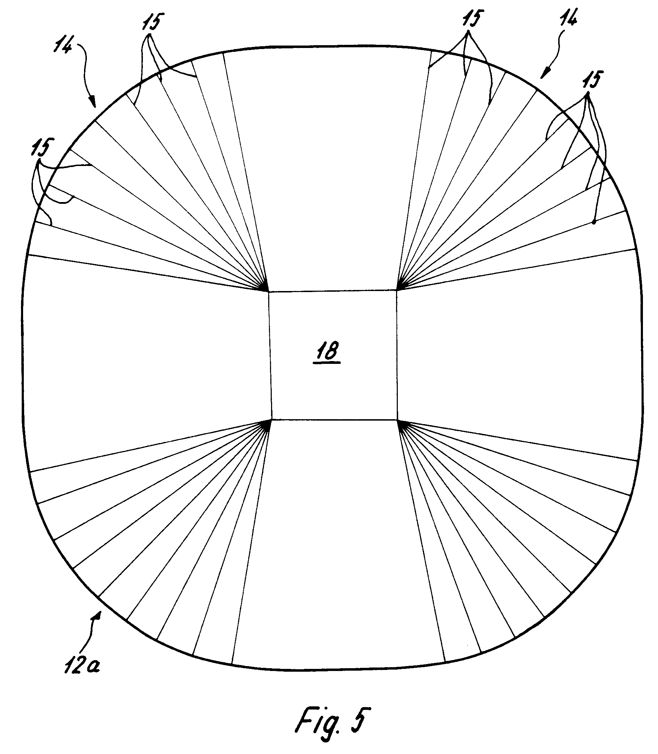

In Fig. 2 ist gezeigt, daß in den nutzbaren Innenraum 11 des Filtergefäßes 10 ein Adapter 16 eingesetzt werden kann, der selbst die Form einer Pyramide aufweist. Dieser Adapter 16 ist in die Spitze des pyramidenartigen, nutzbaren Innenraumes 11 eingesetzt. Die Grundfläche 17 dieses Adapters 16 dient zur Abstützung eines Filterpapiereinsatzes 12a, der in Fig. 5 dargestellt ist.

Der Filterpapiereinsatz 12a gemäß Fig. 5 ist aus seiner dargestellten, flachliegenden Form durch eine Vielzahl von Falzungen 15 in seinen Eckbereichen 14 zu einem pyramidenstumpfartigen Gebilde aufrichtbar. Die kleine Grundfläche 18 dieses pyramidenstumpfartigen Filterpapiereinsatzes 12a entspricht dabei etwa der Größe der Grundfläche 17 des Adapters 16 des Filtergefäßes 10 nach Fig. 2. Damit kann auch der pyramidenstumpfartige Filterpapiereinsatz 12a im Filtergefäß 10 allseitig vollkommen abgestützt werden.

Das Verhältnis zwischen der kleinen Grundfläche 18 des Filterpapiereinsatzes 12a und dessen großer Grundfläche in seiner Gebrauchsstellung liegt etwa im Bereich von 1:10.

Wird in Verbindung mit einem pyramidenstumpfartigen Filterpapiereinsatz 12a gemäß Fig. 5 insgesamt eine Verringerung der Bauhöhe der gesamten Filtervorrichtung angestrebt, so ist die Verwendung eines Filtergefäßes vorgesehen, dessen Innenraum 11 schon bauseitig pyramidenstumpfartig gestaltet ist, d.h., daß hier die Bauhöhe des in Fig. 2 dargestellten Adapters 16 an Gesamtbauhöhe eingespart wird.

Als zweckmäßig hat sich herausgestellt, wenn das Maß der Abschrägung der Ecken 13 des Filtergefäßes 10 so gewählt wird, daß der Abstand dieser Abschrägungen zwischen dem ursprünglichen Eckenmaß und einem in gleicher Höhenlage einbeschriebenen Kreis etwa gleich groß ist.

In Fig. 4 ist durch strichpunktierte Linien die vorstehend beschriebene Relation angedeutet. Der einbeschriebene Kreis ist mit K, das ursprüngliche Eckenmaß mit I bezeichnet. Es wird deutlich, daß die Abschrägung der Ecken 13 etwa zwischen diesen beiden Markierungsgrößen liegt.

Das Filtergefäß 10 ist vorteilhafterweise auch im Bereich seiner abgeschrägten Ecken 13 mit Rippen 19 versehen, so daß sich durch die Abschrägung des Filtergefäßes 10 selbst und der damit einhergehenden Abschrägung des Filterpapiereinsatzes kein Verlust an wirksamer Filterfläche ergibt.

Die Form des Filterpapiereinsatzes 12 nach den Fig. 3 und 4 bietet den Vorteil, daß die Zuschnittsform für einen herkömmlichen Pyramidenfilter beibehalten werden kann, so daß bei Bedarf ein neu gestalteter Filterpapiereinsatz 12 auch für vorhandene Pyramidenfilter verwendbar ist. Dies ist besonders im Hinblick auf eine rationelle Fertigung derartiger Filterpapiereinsätze für unterschiedliche Zwecke sehr vorteilhaft.

## Patentansprüche

1. Filtervorrichtung zur Herstellung von Aromaauszügen aus Kaffee- oder Tee, bestehend aus einem Filtergefäß (10) und einem dem Filtergefäß (10) angepaßten Filterpapiereinsatz (12,12a), wobei der genutzte Innenraum des Filtergefäßes (10) und damit auch der Filterpapiereinsatz (12, 12a) im Gebrauch eine pyramidenartigen Form aufweisen und die Ecken (13) des Filtergefäßes (10) im genutzten Inneraum (11) abgeschrägt oder anderweitig gebrochen sind, **dadurch gekennzeichnet,** daß die Abschrägung jeder Ecke so bemessen ist, daß ihr Abstand zum ursprünglichen Eckenmaß etwa dem Abstand zu einem in gleicher Höhenlage einbeschriebenen Kreis entspricht, und daß der Filterpapiereinsatz (12,12a) in seinen Eckbereichen (14) mit jeweils zwei zusätzlichen Falten (15) versehen ist, welche ein weitestgehend formschlüssiges Anliegen des Filterpapiereinsatzes (12,12a) an den abgeschrägten Ecken (13) des Filtergefäßes (10) ermöglichen.

2. Filtervorrichtung zur Herstellung von Aromaauszügen aus Kaffee oder Tee, bestehend aus einem Filtergefäß (10) und einem dem Filtergefäß (10) angepaßten Filterpapiereinsatz (12a), wobei der genutzte Innenraum des Filtergefäßes (10) und damit auch der Filterpapiereinsatz (12a) im Gebrauch eine pyramidenartige Form aufweisen und die Ecken (13) des Filtergefäßes (10) im genutzten Innenraum (11) abgeschrägt oder anderweitig gebrochen sind, dadurch gekennzeichnet, daß die Abschrägung jeder Ecke so bemessen ist, daß ihr Abstand zum ursprünglichen Eckenmaß etwa dem Abstand zu einem in gleicher Höhenlage einbeschriebenen Kreis entspricht, daß das Filtergefäß (10) einen pyramidenstumpfartigen Innenraum (11) aufweist, daß der Filterpapiereinsatz (12a) in Gebrauchsstellung eine ebenso pyramidenstumpfartige Form aufweist und daß der Filterpapiereinsatz (12a) aus einem flachen Filterpapierzuschnitt mit einer Vielzahl von Falten (15) in seinen Eckbereichen (14) pyramidenstumpfartig aufgerichtet ist.

3. Filtervorrichtung nach Anspruch 2, dadurch gekennzeichnet, daß das Verhältnis der kleineren Grundfläche (18) zur größeren Grundfläche etwa im Bereich von 1 : 10 liegt.

4. Filtervorrichtung nach Anspruch 2, dadurch gekennzeichnet, daß das Filtergefäß (10) einen ursprünglich pyramidenartigen Innenraum (11) aufweist und mit einem in dessen Spitze eingesetzten Adapter (16) ausgestattet ist, der selbst pyramidenförmig gestaltet ist und auf dessen Grundfläche (17) der pyramidenstumpfartige Filterpapiereinsatz (12a) abgestützt ist.

5. Filtervorrichtung nach Anspruch 1 oder 2, dadurch gekennzeichnet, daß das Filtergefäß (10) auch im Bereich seiner abgeschrägten Ecken mit Rippen (19) zur Abstützung der dort anliegenden Bereiche des Filterpapiereinsatzes (12,12a) ausgestattet ist.

6. Filtervorrichtung nach Anspruch 1, dadurch gekennzeichnet, daß der Filterpapiereinsatz (12) in Gebrauchsstellung mit Ausnahme der an den abgeschrägten Ecken (13) des Filtergefäßes (10) anliegenden Bereiche eine reine Pyramidenform aufweist und in Nichtgebrauchsstellung vollkommen flach zusammenlegbar ist.

## Claims

1. Filter device for the production of aromatic infusions of coffee or tea, consisting of a filter vessel (10) and a filter paper insert (12, 12a) matched to the filter vessel (10), wherein the used interior space of the filter vessel (10) and thus also of the filter paper insert (12, 12a) in use have a pyramidal form and the corners (13) of the filter vessel (10) in the used interior space (11) are bevelled or otherwise chamfered, characterised thereby that the bevelling of each corner is so dimensioned that its spacing from the original corner dimension approximately corresponds to the spacing from a circle inscribed at equal height position, and that the filter paper insert (12, 12a) is provided in its corner regions (14) with two additional folds (15), which enable as much as possible shape-locking contact of the filter paper insert (12, 12a) with the bevelled edges (13) of the filter vessel (10).

2. Filter device for the production of aromatic infusions of coffee or tea, consisting of a filter vessel (10) and a filter paper insert (12, 12a) matched to the filter vessel (10), wherein the used interior space of the filter vessel (10) and thus also of the filter paper insert (12, 12a) in use have a pyramidal form and the corners (13) of the filter vessel (10) in the used interior space (11) are bevelled or otherwise chamfered, characterised thereby that the bevelling of each corner is so dimensioned that its spacing from the original corner dimension approximately corresponds to the spacing from a circle inscribed at equal height position, that the filter vessel (10) has a frustum-shaped interior space (11), that the filter paper insert (12a) in use position has a frustum-shaped form in the same manner and that the filter paper insert (12a) is erected frustum-shaped from a flat filter paper blank with a plurality of folds (15) in its corner regions.

3. Filter device according to claim 2, characterised thereby that the ratio of the smaller base (18) to the larger base lies in about the region of 1:10.

4. Filter device according to claim 2, characterised thereby tht the filter vessel (10) has an originally pyramidal interior space (11) and is provided with an adapter (16) which is inserted in the tip thereof and is itself pyramidally shaped and on the base (17) of which the frustum-shaped filter paper insert (12a) is supported.

5. Filter device according to claim 1 or 2, characterised thereby that the filter vessel (10) is also equipped in the region of its bevelled corners with ribs (19) for the support of the regions of the filter paper insert (12, 12a) contacting there.

6. Filter device according to claim 1, characterised thereby that the filter paper insert (12) in the use position has, apart from the regions contacting the bevelled corners (13) of the filter vessel (10), a pure pyramid shape and in the non-use position can be folded together completely flat.

## Revendications

1. Filtre pour préparer des extraits aromatiques à partir de café ou de thé, se composant d'un récipient de filtre (10) et d'une garniture de papier filtre (12, 12a) adaptée au récipient de filtre (10), dans lequel l'espace interne utilisé du récipient de filtre (10) et donc également la garniture de papier filtre (12, 12a) comportent à l'utilisation une forme pyramidale et les coins (13) du récipient de filtre (10) sont inclinés dans l'espace interne (11) utilisé ou autrement sont pliés, caractérisé en ce que l'inclinaison de chaque coin est proportionnée de façon que sa distance au coin d'origine correspond sensiblement à la distance à un cercle inscrit dans la même position en hauteur et en ce que la garniture de papier filtre (12, 12a) est munie dans ses zones de coins (14) respectivement de deux plis supplémentaires (15), qui rendent possible une application très largement liée à la forme de la garniture de papier filtre (12, 12a) sur les coins inclinés (13) du récipient de filtre (10).

2. Filtre pour la préparation d'extraits aromatiques à partir de café ou de thé, se composant d'un récipient de filtre (10) et d'une garniture de papier filtre (12a) adaptée au récipient de filtre (10), dans lequel l'espace interne utilisé du récipient de filtre (10) et donc également de la garniture de papier filtre (12a) comportent à l'utilisation une forme pyramidale et les coins (13) du récipient de filtre (10) sont inclinés dans l'espace interne (11) utilisé ou autrement sont pliés, caractérisé en ce que l'inclinaison de chaque coin est proportionnée de façon que sa distance au coin d'origine correspond sensiblement à la distance a un cercle inscrit à la même position en hauteur, en ce que le récipient de filtre (10) comporte un espace interne (11) de forme en tronc de pyramide (11), en ce que la garniture de papier filtre (12a) présente en position d'utilisation une forme également du type tronc de pyramide et en ce que la garniture en papier filtre (12a) est érigée en tronc de pyramide à partir d'une coupe de papier filtre plane ayant un grand nombre de plis (15) dans ses zones de coins (14).

3. filtre selon la revendication 2, caractérisé en ce que le rapport de la plus petite surface de base (18) à la plus grade surface de base se situe environ dans la plage de 1:10.

4. Filtre selon la revendication 2, caractérisé en ce que le récipient de filtre (10) présente un espace interne (11) originellement de type pyramidal et est muni d'un adaptateur (16) à sa pointe, qui est lui-même façonné en forme de pyramide et sur la surface de base (17) duquel s'appuie la garniture de papier filtre (12a) de type en tronc de pyramide.

5. Filtre selon les revendications 1 ou 2, caractérisé en ce que le récipient de filtre (10) est muni aussi au niveau de ses coins inclinés de nervures (19) pour servir d'appui aux zones de la garniture en papier filtre (12, 12a) qui y adhèrent.

6. Filtre selon la revendication 1, caractérisé en ce que la garniture de papier filtre (12) comporte en position d'utilisation une forme pyramidale pure à l'exception des zones adhérant aux coins (13) inclinés du récipient de filtre (10) et peut être rassemblée en position de non-usage sous une forme parfaitement plane.
